# EUROPEAN PATENT APPLICATION

(11) **EP 4 039 715 A1**
(43) Date of publication of application: **10.08.2022**
(21) Application number: 20872934.3
(22) Date of filing: 14.09.2020
(51) Int. Cl.: C08F 18/08, H01M 4/1395, H01M 4/62

(54) **BINDER COMPOSITION FOR SECONDARY BATTERIES, SLURRY COMPOSITION FOR SECONDARY BATTERY ELECTRODES, ELECTRODE FOR SECONDARY BATTERIES, AND SECONDARY BATTERY**

(30) Priority: 30.09.2019 JP 2019180467
(71) Applicant: Zeon Corporation, Tokyo 100-8246 (JP)
(72) Inventor: OSHIMA Hiroki, Tokyo 100-8246 (JP); ADACHI Yusuke, Tokyo 100-8246 (JP)
(74) Representative: Parchmann, Stefanie
(86) International application number: PCT/JP2020/034795
(87) International publication number: WO 2021/065457

(57) **Abstract**

Provided is a binder composition for a secondary battery with which it is possible to produce a slurry composition for a secondary battery electrode that has excellent preservation stability and can produce an electrode having excellent peel strength. The binder composition for a secondary battery contains a water-soluble polymer and polyvalent metal ions. The water-soluble polymer includes a vinyl alcohol structural unit and a carboxy group-containing monomer unit. The content of the polyvalent metal ions is not less than 0.1 mass ppm and not more than 10,000 mass ppm relative to the water-soluble polymer.

## Description

### TECHNICAL FIELD

The present disclosure relates to a binder composition for a secondary battery, a slurry composition for a secondary battery electrode, an electrode for a secondary battery, and a secondary battery.

### BACKGROUND

Secondary batteries such as lithium ion secondary batteries have characteristics such as compact size, light weight, high energy density, and the ability to be repeatedly charged and discharged, and are used in a wide variety of applications. Consequently, in recent years, studies have been made to improve battery members such as electrodes for the purpose of achieving even higher secondary battery performance.

An electrode for a lithium ion secondary battery, for example, generally includes a current collector and an electrode mixed material layer formed on the current collector. The electrode mixed material layer is formed by, for example, applying a slurry composition obtained by mixing an electrode active material, a binder-containing binder composition, and so forth onto a current collector, and drying the slurry composition so as to bind the electrode active material and the like through the binder.

There have previously been instances in which a copolymer of vinyl alcohol and an alkali metal-neutralized ethylenically unsaturated carboxylic acid has been used as a binder for forming an electrode mixed material layer (refer to Patent Literature (PTL) 1 to 3).

### CITATION LIST

### Patent Literature

PTL 1: JP2015-201267A
PTL 2: WO2014/207967A1
PTL 3: WO2019/054350A1

### SUMMARY

### (Technical Problem)

It would be beneficial for a binder composition containing the conventional binder described above to cause even stronger close adherence between a current collector and an electrode mixed material layer obtained using the binder composition (i.e., increase electrode peel strength).

Moreover, it is generally desirable that a binder composition sufficiently inhibits gelation and sedimentation of solid content even upon long-term preservation of a slurry composition that has been produced using the binder composition (i.e., ensures preservation stability of the slurry composition).

In other words, there is room for improvement of a binder composition containing the conventional binder described above in terms of ensuring preservation stability of a slurry composition while also improving peel strength of an electrode.

Accordingly, one object of the present disclosure is to provide a binder composition for a secondary battery with which it is possible to produce a slurry composition for a secondary battery electrode that has excellent preservation stability and can produce an electrode having excellent peel strength.

Another object of the present disclosure is to provide a slurry composition for a secondary battery electrode that has excellent preservation stability and can produce an electrode having excellent peel strength.

Yet another object of the present disclosure is to provide an electrode for a secondary battery that has excellent peel strength and a secondary battery that includes this electrode for a secondary battery.

### (Solution to Problem)

The inventors conducted diligent investigation to achieve the objects set forth above. As a result, the inventors discovered that by using a binder composition containing a specific water-soluble polymer and a specific quantitative ratio of polyvalent metal ions relative to the water-soluble polymer, it is possible to produce a slurry composition having excellent preservation stability and an electrode having excellent peel strength, and, in this manner, completed the present disclosure.

Specifically, the present disclosure aims to advantageously solve the problems set forth above, and a presently disclosed binder composition for a secondary battery comprises a water-soluble polymer and polyvalent metal ions, wherein the water-soluble polymer includes a vinyl alcohol structural unit and a carboxy group-containing monomer unit, and content of the polyvalent metal ions is not less than 0.1 mass ppm and not more than 10,000 mass ppm relative to the water-soluble polymer. By using a binder composition that contains 0.1 mass ppm to 10,000 mass ppm of polyvalent metal ions relative to a water-soluble polymer including a vinyl alcohol structural unit and a carboxy group-containing monomer unit in this manner, it is possible to produce a slurry composition having excellent preservation stability and an electrode having excellent peel strength.

Note that when a polymer is said to be "water-soluble" in the present disclosure, this means that when 0.5 g of the polymer is dissolved in 100 g of water at a temperature of 25°C, insoluble content is less than 1.0 mass%.

Moreover, a "monomer unit" of a polymer referred to in the present disclosure is a structural unit derived from that monomer. Also note that the term "monomer unit" as used in the present disclosure is inclusive both of a structural unit that is introduced into a polymer through polymerization using that monomer and also of a structural unit that is introduced into a polymer through polymerization using an ester of that monomer and subsequent saponification.

In the presently disclosed binder composition for a secondary battery, the water-soluble polymer preferably has a molecular weight distribution of not less than 1.5 and not more than 20. When the molecular weight distribution (ratio of weight-average molecular weight relative to number-average molecular weight) of the water-soluble polymer is within the range set forth above, preservation stability of a slurry composition and peel strength of an electrode can be further improved. Moreover, initial resistance of a secondary battery can be reduced while also improving cycle characteristics of the secondary battery.

Note that the "molecular weight distribution" of a water-soluble polymer referred to in the present disclosure can be calculated from values for the weight-average molecular weight and number-average molecular weight that are measured by a method described in the EXAMPLES section.

In the presently disclosed binder composition for a secondary battery, the polyvalent metal ions are preferably either or both of ions of a transition metal and ions of a metal belonging to group 13 of the periodic table. When ions of a transition metal and/or ions of a metal belonging to group 13 of the periodic table are used as the polyvalent metal ions, peel strength of an electrode can be further improved, and initial resistance of a secondary battery can be reduced while also improving cycle characteristics of the secondary battery.

The presently disclosed binder composition for a secondary battery preferably further comprises a particulate polymer. When the binder composition further contains a particulate polymer, peel strength of an electrode can be further improved, and initial resistance of a secondary battery can be reduced while also improving cycle characteristics of the secondary battery.

In the presently disclosed binder composition for a secondary battery, the particulate polymer preferably includes a carboxy group-containing monomer unit in a proportion of not less than 1 mass% and not more than 10 mass%. When the particulate polymer includes a carboxy group-containing monomer unit in a proportion that is within the range set forth above, preservation stability of a slurry composition and peel strength of an electrode can be further improved, and cycle characteristics of a secondary battery can be enhanced.

Note that the proportional contents of "structural units" (inclusive of "monomer units") in a polymer referred to in the present disclosure can be measured using a nuclear magnetic resonance (NMR) method such as ¹H-NMR.

In the presently disclosed binder composition for a secondary battery, the water-soluble polymer preferably constitutes a proportion of not less than 30 mass% and not more than 80 mass% among a total of the water-soluble polymer and the particulate polymer. When the proportion constituted by the content of the water-soluble polymer among the total content of the water-soluble polymer and the particulate polymer is within the range set forth above, peel strength of an electrode can be further improved, and initial resistance of a secondary battery can be reduced while also improving cycle characteristics of the secondary battery.

Moreover, the present disclosure aims to advantageously solve the problems set forth above, and a presently disclosed slurry composition for a secondary battery electrode comprises: an electrode active material; and any one of the binder compositions for a secondary battery set forth above. A slurry composition that contains an electrode active material and any one of the binder compositions set forth above has excellent preservation stability and can be used to produce an electrode having excellent peel strength.

In the presently disclosed slurry composition for a secondary battery electrode, the electrode active material is preferably a negative electrode active material including one or more selected from the group consisting of Si, Sn, Ge, Pb, Al, and Li. A negative electrode active material that includes one or more of the metals set forth above displays significant expansion and contraction in accompaniment to charging and discharging of a secondary battery. Even in a situation in which an electrode (negative electrode) is produced using such a negative electrode active material, it is possible to cause a secondary battery to display excellent cycle characteristics by using a slurry composition that contains the presently disclosed binder composition.

Furthermore, the present disclosure aims to advantageously solve the problems set forth above, and a presently disclosed electrode for a secondary battery comprises an electrode mixed material layer formed using any one of the slurry compositions for a secondary battery electrode set forth above. An electrode that is formed using the slurry composition set forth above has excellent peel strength.

Also, the present disclosure aims to advantageously solve the problem set forth above, and a presently disclosed secondary battery comprises the electrode for a secondary battery set forth above. A secondary battery that includes the electrode set forth above has low initial resistance and excellent cycle characteristics.

### (Advantageous Effect)

According to the present disclosure, it is possible to provide a binder composition for a secondary battery with which it is possible to produce a slurry composition for a secondary battery electrode that has excellent preservation stability and can produce an electrode having excellent peel strength.

Moreover, according to the present disclosure, it is possible to provide a slurry composition for a secondary battery electrode that has excellent preservation stability and can produce an electrode having excellent peel strength.

Furthermore, according to the present disclosure, it is possible to provide an electrode for a secondary battery that has excellent peel strength and a secondary battery that includes this electrode for a secondary battery.

### DETAILED DESCRIPTION

The following provides a detailed description of embodiments of the present disclosure.

The presently disclosed binder composition for a secondary battery can be used in production of a slurry composition for a secondary battery electrode, for example. Moreover, a slurry composition for a secondary battery electrode that is produced using the presently disclosed binder composition for a secondary battery can be used in formation of an electrode of a secondary battery such as a lithium ion secondary battery. Furthermore, a feature of the presently disclosed secondary battery is that an electrode for a secondary battery formed using the presently disclosed slurry composition for a secondary battery electrode is used therein.

Note that the presently disclosed binder composition for a secondary battery and slurry composition for a secondary battery electrode can be particularly suitably used in formation of a negative electrode of a secondary battery.

### (Binder composition for secondary battery)

The presently disclosed binder composition contains polyvalent metal ions and a water-soluble polymer that includes a vinyl alcohol structural unit and a carboxy group-containing monomer unit, and may optionally further contain a particulate polymer, a solvent, and other components that can be compounded in an electrode of a secondary battery or the like. In the presently disclosed binder composition, the content of the polyvalent metal ions is required to be not less than 0.1 mass ppm and not more than 10,000 mass ppm relative to the water-soluble polymer.

As a result of the presently disclosed binder composition containing the specific water-soluble polymer described above and polyvalent metal ions and as a result of the content of the polyvalent metal ions being 0.1 mass ppm to 10,000 mass ppm relative to the water-soluble polymer, the presently disclosed binder composition can sufficiently ensure preservation stability of a slurry composition produced using the binder composition and can cause an electrode produced using the binder composition to display excellent peel strength.

Although it is not clear why preservation stability of a slurry composition can be ensured while also increasing peel strength of an electrode by using the presently disclosed binder composition, the reason for this is presumed to be as follows.

Firstly, in a slurry composition produced using the binder composition, the water-soluble polymer adsorbs well to the surface of an electrode active material via a hydroxy group included in the vinyl alcohol structural unit while, on the other hand, also being well dispersible in the slurry composition through a carboxy group included in the carboxy group-containing monomer unit.

The presently disclosed binder composition also contains at least 0.1 mass ppm of polyvalent metal ions relative to the water-soluble polymer. These polyvalent metal ions cause ionic cross-linking of carboxy groups in the water-soluble polymer and can thereby increase the strength of an electrode mixed material layer produced using the binder composition and cause good close adherence of the electrode mixed material layer to a current collector. Conversely, the inclusion of an excessive amount of polyvalent metal ions in the binder composition may cause aggregation of the water-soluble polymer through excessive ionic cross-linking, resulting in gelation or sedimentation of solid content in a slurry composition. In response, the occurrence of gelation and sedimentation of solid content caused by polyvalent metal ions can be inhibited in the presently disclosed binder composition because the amount of polyvalent metal ions is not more than 10,000 mass ppm relative to the water-soluble polymer.

Consequently, preservation stability of a slurry composition can be sufficiently ensured while, on the other hand, improving peel strength of an electrode by using the presently disclosed binder composition.

### <Water-soluble polymer>

The water-soluble polymer includes at least a vinyl alcohol structural unit and a carboxy group-containing monomer unit. Note that the water-soluble polymer may also include structural units other than the vinyl alcohol structural unit and the carboxy group-containing monomer unit (i.e., other structural units).

### <<Vinyl alcohol structural unit>>

The vinyl alcohol structural unit is a structural unit represented by the following formula. 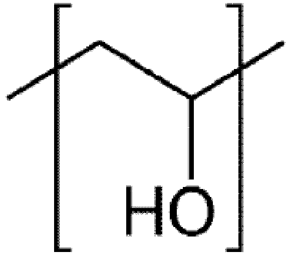 Such a vinyl alcohol structural unit can be introduced into the water-soluble polymer by, for example, performing saponification of a polymer that includes a vinyl ester monomer unit.

Examples of vinyl ester monomers that can form a vinyl ester monomer unit include vinyl formate, vinyl acetate, vinyl propionate, vinyl valerate, vinyl laurate, vinyl stearate, vinyl benzoate, vinyl pivalate, and vinyl versatate. One of these vinyl ester monomers may be used individually, or two or more of these vinyl ester monomers may be used in combination. Of these vinyl ester monomers, vinyl acetate is preferable.

The proportion constituted by the vinyl alcohol structural unit among all structural units included in the water-soluble polymer when all structural units are taken to be 100 mass% is preferably 10 mass% or more, more preferably 30 mass% or more, even more preferably 40 mass% or more, and particularly preferably 45 mass% or more, and is preferably 90 mass% or less, more preferably 80 mass% or less, even more preferably 70 mass% or less, and particularly preferably 60 mass% or less. Flexibility of an electrode can be sufficiently ensured when the proportional content of the vinyl alcohol structural unit is 10 mass% or more, whereas the occurrence of poor coating due to foaming during production of a slurry composition can be inhibited when the proportional content of the vinyl alcohol structural unit is 90 mass% or less.

### <<Carboxy group-containing monomer unit>>

The carboxy group-containing monomer unit is a structural unit that includes a carboxy group (-COOH). Note that the carboxy group of the carboxy group-containing monomer unit may be in the form of a salt such as an alkali metal salt (for example, -COONa, -COOLi, or -COOK), and is preferably -COONa.

Although such a carboxy group-containing monomer unit may be introduced into the water-soluble polymer by using a carboxy group-containing monomer as a monomer in production of the water-soluble polymer or may be introduced into the water-soluble polymer by performing polymerization using an ester of a carboxy group-containing monomer (carboxylic acid ester monomer) as a monomer and subsequently performing saponification of a carboxylic acid ester monomer unit that has been formed, the latter of these methods is preferable.

An ester of an aliphatic unsaturated carboxylic acid can preferably be used as a carboxylic acid ester monomer that can form a carboxylic acid ester monomer unit.

The ester of an aliphatic unsaturated carboxylic acid may be an ester of (meth)acrylic acid, an ester of itaconic acid, or the like. Of these esters, an ester of (meth)acrylic acid is preferable. In other words, the carboxy group-containing monomer unit included in the water-soluble polymer may be a (meth)acrylic acid unit, an itaconic acid unit, or the like, and is preferably a (meth)acrylic acid unit.

Note that in the present disclosure, "(meth)acryl" is used to indicate "acryl" and/or "methacryl".

The ester of (meth)acrylic acid is, for example, preferably an alkyl ester of (meth)acrylic acid such as methyl (meth)acrylate, ethyl (meth)acrylate, n-propyl (meth)acrylate, i-propyl (meth)acrylate, n-butyl (meth)acrylate, or t-butyl (meth)acrylate. Of these esters of (meth)acrylic acid, methyl (meth)acrylate is particularly preferable.

Note that one carboxylic acid ester monomer may be used individually or two or more carboxylic acid ester monomers may be used in combination in production of the water-soluble polymer. Moreover, the water-soluble polymer may include one type of carboxy group-containing monomer unit or may include two or more types of carboxy group-containing monomer units.

Note that in the present disclosure, "(meth)acrylate" is used to indicate "acrylate" and/or "methacrylate".

The proportion constituted by the carboxy group-containing monomer unit among all structural units included in the water-soluble polymer when all structural units are taken to be 100 mass% is preferably 10 mass% or more, more preferably 20 mass% or more, even more preferably 30 mass% or more, and particularly preferably 40 mass% or more, and is preferably 90 mass% or less, more preferably 70 mass% or less, even more preferably 60 mass% or less, and particularly preferably 55 mass% or less. Preservation stability of a slurry composition can be further improved when the proportional content of the carboxy group-containing monomer unit is 10 mass% or more, whereas flexibility of an electrode can be sufficiently ensured when the proportional content of the carboxy group-containing monomer unit is 90 mass% or less.

### <<Other structural units>>

Examples of other structural units that can optionally be included in the water-soluble polymer include structural units that are derived from monomers (other monomers) that are copolymerizable with a vinyl ester monomer and a carboxylic acid ester monomer such as described above. Examples of such other monomers include olefins having a carbon number of 2 to 30 such as ethylene, propylene, 1-butene, and isobutene; and vinyl cyanides such as (meth)acrylonitrile. One of these other monomers may be used individually, or two or more of these other monomers may be used in combination.

Note that in the present disclosure, "(meth)acrylo" is used to indicate "acrylo" and/or "methacrylo".

### <<Properties of water-soluble polymer>>

The molecular weight distribution of the water-soluble polymer is preferably 1.5 or more, and more preferably 1.8 or more, and is preferably 20 or less, more preferably 10 or less, and even more preferably 4 or less. When the molecular weight distribution of the water-soluble polymer is within any of the ranges set forth above, preservation stability of a slurry composition and peel strength of an electrode can be further improved. Moreover, initial resistance of a secondary battery can be reduced while also improving cycle characteristics of the secondary battery.

### <<Production method of water-soluble polymer>>

No specific limitations are placed on the method by which the water-soluble polymer is produced. For example, the water-soluble polymer can be obtained by performing saponification of a polymer that has been obtained through polymerization of a monomer composition containing a vinyl ester monomer and a carboxylic acid ester monomer by a conventional and commonly known method. The saponification can be performed according to a known saponification method using a base such as sodium hydroxide or potassium hydroxide without any specific limitations.

### <Polyvalent metal ions>

The polyvalent metal ions may be ions of a transition metal and/or ions of a metal belonging to group 13 of the periodic table without any specific limitations so long as they are metal ions having a valence of 2 or higher. By using ions of a transition metal and/or ions of a metal belonging to group 13 of the periodic table as the polyvalent metal ions, it is possible to further improve peel strength of an electrode and to reduce initial resistance of a secondary battery while also improving cycle characteristics of the secondary battery.

The ions of a transition metal may be titanium ions (Ti³⁺, Ti⁴⁺), chromium ions (Cr²⁺, Cr³⁺), manganese ions (Mn²⁺), iron ions (Fe²⁺, Fe³⁺), cobalt ions (Co²⁺, Co³⁺), nickel ions (Ni²⁺), copper ions (Cu²⁺), or zinc ions (Zn²⁺).

The ions of a metal belonging to group 13 of the periodic table may be aluminum ions (Al³⁺).

Note that one type of polyvalent metal ions may be used individually, or two or more types of polyvalent metal ions may be used in combination.

Of these polyvalent metal ions, iron ions, chromium ions, copper ions, aluminum ions, zinc ions, nickel ions, manganese ions, and cobalt ions are preferable from a viewpoint of further improving peel strength of an electrode through good interactions with carboxy groups and reducing initial resistance of a secondary battery while also improving cycle characteristics of the secondary battery, with iron ions, aluminum ions, nickel ions, and calcium ions being more preferable, and iron ions, aluminum ions, and nickel ions being even more preferable.

The content of the polyvalent metal ions in the presently disclosed binder composition is required to be not less than 0.1 mass ppm and not more than 10,000 mass ppm relative to the above-described water-soluble polymer, is preferably 1 mass ppm or more, more preferably 10 mass ppm or more, even more preferably 50 mass ppm or more, and particularly preferably 120 mass ppm or more relative to the water-soluble polymer, and is preferably 5,000 mass ppm or less, more preferably 3,000 mass ppm or less, even more preferably 1,500 mass ppm or less, and particularly preferably 700 mass ppm or less relative to the water-soluble polymer. Peel strength of an electrode decreases when the content of the polyvalent metals ions is less than 0.1 mass ppm relative to the water-soluble polymer, whereas preservation stability of a slurry composition cannot be ensured when the content of the polyvalent metal ions is more than 10,000 mass ppm relative to the water-soluble polymer.

No specific limitations are placed on the method by which the polyvalent metal ions are supplied into the binder composition. For example, the water-soluble polymer and a compound that can supply polyvalent metal ions may be mixed in production of the binder composition so as to produce a binder composition containing the water-soluble polymer and polyvalent metal ions.

The compound that can supply polyvalent metal ions is preferably an ionically bonded compound that includes a polyvalent metal ion (cation) and an anion (for example, a sulfuric acid salt of a polyvalent metal ion or a nitric acid salt of a polyvalent metal ion). It is presumed that by producing the binder composition using an ionically bonded compound, polyvalent metal ions become freely present in the binder composition and enable good formation of ionic cross-links such as previously described, which thereby enables sufficient improvement of peel strength of an electrode. Note that in the case of a binder composition that is produced using an ionically bonded compound including a polyvalent metal ion and an anion, the binder composition contains anions (sulfate ions, nitrate ions, etc.) derived from the ionically bonded compound in addition to polyvalent metal ions. In other words, the binder composition may contain either or both of sulfate ions and nitrate ions, for example.

### <Particulate polymer>

The presently disclosed binder composition preferably contains a particulate polymer. By producing an electrode using a binder composition that contains a particulate polymer in addition to the above-described water-soluble polymer and polyvalent metal ions, it is possible to further improve peel strength of an electrode and to reduce initial resistance of a secondary battery while also improving cycle characteristics of the secondary battery. The particulate polymer is a water-insoluble polymer. Note that when a polymer is said to be "water-insoluble" in the present disclosure, this means that when 0.5 g of the polymer is dissolved in 100 g of water at a temperature of 25°C, insoluble content is 90 mass% or more.

Also note that one particulate polymer may be used individually, or two or more particulate polymers may be used in combination.

### <<Chemical composition>>

The particulate polymer is preferably a polymer including at least a carboxy group-containing monomer unit. It is presumed that when the particulate polymer includes a carboxy group-containing monomer unit, the polyvalent metal ions that cause ionic cross-linking of carboxy groups in the water-soluble polymer also cause ionic cross-linking of carboxy groups in the particulate polymer, which causes formation of a more rigid network and thereby enables further improvement of peel strength of an electrode and enhancement of cycle characteristics of a secondary battery.

### [Carboxy group-containing monomer unit]

Examples of carboxy group-containing monomers that can form the carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.

Examples of monocarboxylic acids include acrylic acid, methacrylic acid, and crotonic acid.

Examples of derivatives of monocarboxylic acids include 2-ethylacrylic acid, isocrotonic acid, α-acetoxyacrylic acid, β-trans-aryloxyacrylic acid, α-chloro-β-E-methoxyacrylic acid, and β-diaminoacrylic acid.

Examples of dicarboxylic acids include maleic acid, fumaric acid, and itaconic acid.

Examples of dicarboxylic acid derivatives include methylmaleic acid, dimethylmaleic acid, phenylmaleic acid, chloromaleic acid, dichloromaleic acid, fluoromaleic acid, and maleic acid esters such as methylallyl maleate, diphenyl maleate, nonyl maleate, decyl maleate, dodecyl maleate, octadecyl maleate, and fluoroalkyl maleates.

Examples of acid anhydrides of dicarboxylic acids include maleic anhydride, acrylic anhydride, methylmaleic anhydride, and dimethylmaleic anhydride.

Furthermore, an acid anhydride that produces a carboxy group through hydrolysis can also be used as a monomer including a carboxy group.

Other examples include monoesters and diesters of α,β-ethylenically unsaturated polybasic carboxylic acids such as monoethyl maleate, diethyl maleate, monobutyl maleate, dibutyl maleate, monoethyl fumarate, diethyl fumarate, monobutyl fumarate, dibutyl fumarate, monocyclohexyl fumarate, dicyclohexyl fumarate, monoethyl itaconate, diethyl itaconate, monobutyl itaconate, and dibutyl itaconate.

One of these carboxy group-containing monomers may be used individually, or two or more of these carboxy group-containing monomers may be used in combination. Of these carboxy group-containing monomers, acrylic acid, methacrylic acid, and itaconic acid are preferable, and methacrylic acid and itaconic acid are more preferable.

The proportion constituted by the carboxy group-containing monomer unit among all structural units included in the particulate polymer when all structural units are taken to be 100 mass% is preferably 0.5 mass% or more, more preferably 1 mass% or more, even more preferably 2 mass% or more, and particularly preferably 3.8 mass% or more, and is preferably 40 mass% or less, more preferably 20 mass% or less, even more preferably 10 mass% or less, and particularly preferably 8.5 mass% or less. Peel strength of an electrode can be further improved while also enhancing cycle characteristics of a secondary battery when the proportional content of the carboxy group-containing monomer unit is 0.5 mass% or more, whereas preservation stability of a slurry composition can be further improved when the proportional content of the carboxy group-containing monomer unit is 40 mass% or less.

An acrylic polymer (polymer including a (meth)acrylic acid ester monomer unit) or a conjugated diene polymer (polymer including an aliphatic conjugated diene monomer unit or hydrogenated product thereof) can suitably be used as a particulate polymer including a carboxy group-containing monomer unit from a viewpoint of achieving improvement of electrode peel strength, improvement of secondary battery cycle characteristics, and reduction of secondary battery initial resistance in a good balance.

### [Acrylic polymer]

Examples of structural units that may be included in the acrylic polymer in addition to the carboxy group-containing monomer unit described above and a (meth)acrylic acid ester monomer unit include a nitrile group-containing monomer unit, a cross-linkable group-containing monomer unit, and an aromatic vinyl monomer unit.

### -(Meth)acrylic acid ester monomer unit-

Examples of (meth)acrylic acid ester monomers that can form the (meth)acrylic acid ester monomer unit include alkyl esters of (meth)acrylic acid and perfluoroalkyl esters of (meth)acrylic acid.

Examples of alkyl esters of (meth)acrylic acid include acrylic acid alkyl esters such as methyl acrylate, ethyl acrylate, n-propyl acrylate, isopropyl acrylate, n-butyl acrylate, t-butyl acrylate, isobutyl acrylate, n-pentyl acrylate, isopentyl acrylate, hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, n-butyl methacrylate, t-butyl methacrylate, isobutyl methacrylate, n-pentyl methacrylate, isopentyl methacrylate, hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate.

Examples of perfluoroalkyl esters of (meth)acrylic acid include 2-(perfluoroalkyl)ethyl acrylates such as 2-(perfluorobutyl)ethyl acrylate, 2-(perfluoropentyl)ethyl acrylate, 2-(perfluorohexyl)ethyl acrylate, 2-(perfluorooctyl)ethyl acrylate, 2-(perfluorononyl)ethyl acrylate, 2-(perfluorodecyl)ethyl acrylate, 2-(perfluorododecyl)ethyl acrylate, 2-(perfluorotetradecyl)ethyl acrylate, and 2-(perfluorohexadecyl)ethyl acrylate; and 2-(perfluoroalkyl)ethyl methacrylates such as 2-(perfluorobutyl)ethyl methacrylate, 2-(perfluoropentyl)ethyl methacrylate, 2-(perfluorohexyl)ethyl methacrylate, 2-(perfluorooctyl)ethyl methacrylate, 2-(perfluorononyl)ethyl methacrylate, 2-(perfluorodecyl)ethyl methacrylate, 2-(perfluorododecyl)ethyl methacrylate, 2-(perfluorotetradecyl)ethyl methacrylate, and 2-(perfluorohexadecyl)ethyl methacrylate.

One of these (meth)acrylic acid ester monomers may be used individually, or two or more of these (meth)acrylic acid ester monomers may be used in combination. Of these (meth)acrylic acid ester monomers, alkyl esters of (meth)acrylic acid are preferable, and methyl acrylate, ethyl acrylate, and 2-ethylhexyl acrylate are more preferable.

The proportion constituted by the (meth)acrylic acid ester monomer unit among all structural units included in the acrylic polymer when all structural units are taken to be 100 mass% is preferably 40 mass% or more, more preferably 50 mass% or more, even more preferably more than 50 mass%, further preferably 65 mass% or more, and particularly preferably 75 mass% or more, and is preferably 97 mass% or less, more preferably 95 mass% or less, and even more preferably 90 mass% or less.

### -Nitrile group-containing monomer unit-

Examples of nitrile group-containing monomers that can form the nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. One of these nitrile group-containing monomers may be used individually, or two or more of these nitrile group-containing monomers may be used in combination. Of these nitrile group-containing monomers, acrylonitrile and methacrylonitrile are preferable, and acrylonitrile is more preferable.

The proportion constituted by the nitrile group-containing monomer unit among all structural units included in the acrylic polymer when all structural units are taken to be 100 mass% is preferably 3 mass% or more, more preferably 4 mass% or more, and even more preferably 6 mass% or more, and is preferably 30 mass% or less, more preferably 27 mass% or less, and even more preferably 25 mass% or less.

### -Cross-linkable monomer unit-

A monomer that includes a thermally cross-linkable functional group (thermally cross-linkable monomer) such as an epoxy group-containing monomer, an N-methylolamide group-containing monomer, or an oxazoline group-containing monomer is preferable as a cross-linkable monomer that can form the cross-linkable monomer unit from a viewpoint of improving strength and flexibility of an electrode.

The epoxy group-containing monomer may be a monomer that includes a carbon-carbon double bond and an epoxy group. Examples of monomers that include a carbon-carbon double bond and an epoxy group include unsaturated glycidyl ethers such as vinyl glycidyl ether, allyl glycidyl ether, butenyl glycidyl ether, and o-allylphenyl glycidyl ether; monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid.

The N-methylolamide group-containing monomer may be a (meth)acrylamide that includes a methylol group such as N-methylol (meth)acrylamide.

The oxazoline group-containing monomer may be 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, 2-isopropenyl-5-ethyl-2-oxazoline, or the like.

One of these cross-linkable monomers may be used individually, or two or more of these cross-linkable monomers may be used in combination. Of these cross-linkable monomers, epoxy group-containing monomers are preferable.

The proportion constituted by the cross-linkable monomer unit among all structural units included in the acrylic polymer when all structural units are taken to be 100 mass% is preferably 0.1 mass% or more, and is preferably 10 mass% or less, and more preferably 5 mass% or less.

### -Aromatic vinyl monomer unit-

Examples of aromatic vinyl monomers that can form the aromatic vinyl monomer unit include styrene, α-methylstyrene, vinyltoluene, and divinylbenzene. One of these aromatic vinyl monomers may be used individually, or two or more of these aromatic vinyl monomers may be used in combination. Of these aromatic vinyl monomers, styrene is preferable.

The proportion constituted by the aromatic vinyl monomer unit among all structural units included in the acrylic polymer when all structural units are taken to be 100 mass% is preferably 5 mass% or more, and more preferably 8 mass% or more, and is preferably 40 mass% or less, and more preferably 30 mass% or less.

### [Conjugated diene polymer]

Specific examples of the conjugated diene polymer include aliphatic conjugated diene polymers such as polybutadiene and polyisoprene; aromatic vinyl-aliphatic conjugated diene copolymers such as a styrene-butadiene polymer (SBR); vinyl cyanide-conjugated diene copolymers such as an acrylonitrile-butadiene copolymer (NBR); hydrogenated SBR; and hydrogenated NBR. Of these conjugated diene polymers, aromatic vinyl-aliphatic conjugated diene copolymers such as a styrene-butadiene polymer (SBR) are preferable.

Examples of monomer units that may be included in the aromatic vinyl-aliphatic conjugated diene copolymer in addition to the previously described carboxy group-containing monomer unit, the aromatic vinyl monomer unit, and the aliphatic conjugated diene monomer unit include a hydroxy group-containing monomer unit and the like.

### -Aromatic vinyl monomer unit-

Examples of aromatic vinyl monomers that can form the aromatic vinyl monomer unit include those previously described in the "Acrylic polymer" section. One of these aromatic vinyl monomers may be used individually, or two or more of these aromatic vinyl monomers may be used in combination. Of these aromatic vinyl monomers, styrene is preferable.

The proportion constituted by the aromatic vinyl monomer unit among all structural units included in the conjugated diene polymer when all structural units are taken to be 100 mass% is preferably 35 mass% or more, more preferably 45 mass% or more, and even more preferably 55 mass% or more, and is preferably 80 mass% or less, more preferably 70 mass% or less, and even more preferably 65 mass% or less.

### -Aliphatic conjugated diene monomer unit-

Examples of aliphatic conjugated diene monomers that can form the aliphatic conjugated diene monomer unit include 1,3-butadiene, isoprene (2-methyl-1,3-butadiene), 2,3-dimethyl-1,3-butadiene, 2-chloro-1,3-butadiene, substituted linear conjugated pentadienes, and substituted and side chain conjugated hexadienes. One of these aliphatic conjugated diene monomers may be used individually, or two or more of these aliphatic conjugated diene monomers may be used in combination. Of these aliphatic conjugated diene monomers, 1,3-butadiene and isoprene are preferable.

The proportion constituted by the aliphatic conjugated diene monomer unit among all structural units included in the conjugated diene polymer when all structural units are taken to be 100 mass% is preferably 20 mass% or more, and more preferably 30 mass% or more, and is preferably 70 mass% or less, more preferably 60 mass% or less, even more preferably 50 mass% or less, and particularly preferably 35 mass% or less.

### -Hydroxy group-containing monomer unit-

Examples of hydroxy group-containing monomers that can form the hydroxy group-containing monomer unit include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula CH₂=CR¹-COO-(C_{q}H_{2q}O)ₚ-H (where p represents an integer of 2 to 9, q represents an integer of 2 to 4, and R¹ represents hydrogen or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; and (meth)allyl thioethers of alkylene glycols such as (meth)allyl-2-hydroxyethyl thioether and (meth)allyl-2-hydroxypropyl thioether.

One of these hydroxy group-containing monomers may be used individually, or two or more of these hydroxy group-containing monomers may be used in combination. Of these hydroxy group-containing monomers, 2-hydroxyethyl acrylate is preferable.

### <<Properties of particulate polymer>>

The volume-average particle diameter of the particulate polymer is preferably 80 nm or more, more preferably 90 nm or more, even more preferably 100 nm or more, and particularly preferably 145 nm or more, and is preferably 700 nm or less, more preferably 600 nm or less, and even more preferably 500 nm or less. When the volume-average particle diameter is within any of the ranges set forth above, improvement of electrode peel strength, improvement of secondary battery cycle characteristics, and reduction of secondary battery initial resistance can be achieved in a good balance.

Note that the volume-average particle diameter of a particulate polymer can be measured by a method described in the EXAMPLES section.

The gel content of the particulate polymer is preferably 40 mass% or more, and more preferably 60 mass% or more, and is preferably 98 mass% or less, more preferably 95 mass% or less, and even more preferably 90 mass% or less. When the gel content is within any of the ranges set forth above, improvement of electrode peel strength and secondary battery cycle characteristics can be achieved in a good balance.

Note that the gel content of a particulate polymer can be measured by a method described in the EXAMPLES section.

The glass-transition temperature of the particulate polymer is preferably -30°C or higher, and more preferably -20°C or higher, and is preferably 30°C or lower, more preferably 20°C or lower, and even more preferably 10°C or lower. When the glass-transition temperature is within any of the ranges set forth above, peel strength of an electrode can be increased.

Note that the glass-transition temperature of a particulate polymer can be measured by a method described in the EXAMPLES section.

### <<Production method of particulate polymer>>

The particulate polymer can be produced by performing polymerization of a monomer composition containing the monomers set forth above in an aqueous solvent such as water, for example. The proportional content of each monomer in the monomer composition can be set in accordance with the proportional content of each structural unit (monomer unit) in the particulate polymer.

The polymerization method is not specifically limited and may, for example, be any of solution polymerization, suspension polymerization, bulk polymerization, and emulsion polymerization. Moreover, ionic polymerization, radical polymerization, living radical polymerization, or the like may be adopted as the polymerization reaction. In the polymerization, seed particles may be used to perform seeded polymerization. The polymerization conditions can be set as appropriate depending on the polymerization method and so forth.

Moreover, known additives such as emulsifiers, polymerization initiators, and chain transfer agents can be used in the polymerization, and the used amount thereof may be set as a typically used amount.

### <Content ratio of water-soluble polymer and particulate polymer>

The proportion constituted by the water-soluble polymer among the total of the water-soluble polymer and the particulate polymer when the total amount of the water-soluble polymer and the particulate polymer is taken to be 100 mass% is preferably 30 mass% or more, more preferably 40 mass% or more, and even more preferably 50 mass% or more, and is preferably 80 mass% or less, and more preferably 70 mass% or less. When the proportion constituted by the water-soluble polymer among the total of the water-soluble polymer and the particulate polymer is within any of the ranges set forth above, preservation stability of a slurry composition and peel strength of an electrode can be further improved. Moreover, initial resistance of a secondary battery can be reduced while also enhancing cycle characteristics of the secondary battery.

### <Solvent>

Although either of water or an organic solvent can be used as a solvent that can optionally be contained in the binder composition for a secondary battery, water is preferable. Moreover, a mixed solvent of water and an organic solvent can be used as the solvent. Examples of organic solvents that can be mixed with water include ketones such as diacetone alcohol and γ-butyrolactone; alcohols such as ethyl alcohol, isopropyl alcohol, and normal propyl alcohol; glycol ethers such as propylene glycol monomethyl ether, methyl cellosolve, ethyl cellosolve, ethylene glycol tertiary-butyl ether, butyl cellosolve, 3-methoxy-3-methyl-1-butanol, ethylene glycol monopropyl ether, diethylene glycol monobutyl ether, triethylene glycol monobutyl ether, and dipropylene glycol monomethyl ether; and ethers such as 1,3-dioxolane, 1,4-dioxolane, and tetrahydrofuran. One of these organic solvents may be used individually, or two or more of these organic solvents may be used in combination.

### <Other components>

Examples of other components that can optionally be contained in the binder composition for a secondary battery include, but are not specifically limited to, conductive materials, reinforcing materials, leveling agents, viscosity modifiers, and additives for electrolyte solution. These other components are not specifically limited so long as they do not affect battery reactions and may be selected from commonly known components such as those described in WO2012/115096A1, for example. One of these components may be used individually, or two or more of these components may be used in combination in a freely selected ratio.

### <Production of binder composition>

The presently disclosed binder composition can be produced by mixing the above-described components by a known mixing method.

Mixing of the above-described components can be performed using a mixer such as a ball mill, a sand mill, a bead mill, a pigment disperser, a grinding machine, an ultrasonic disperser, a homogenizer, a planetary mixer, or a FILMIX without any specific limitations.

### (Slurry composition for secondary battery electrode)

The presently disclosed slurry composition contains an electrode active material and the binder composition set forth above, and may optionally further contain other components that can be compounded in an electrode of a secondary battery or the like. For example, the presently disclosed slurry composition may contain an electrode active material, a water-soluble polymer, and a solvent, and may optionally further contain a particulate polymer and other components.

As a result of the presently disclosed slurry composition containing the binder composition set forth above, the presently disclosed slurry composition has excellent preservation stability and an electrode including an electrode mixed material layer formed using the slurry composition has excellent peel strength.

### <Binder composition>

The presently disclosed binder composition for a secondary battery set forth above can be used as the binder composition.

The amount of the binder composition that is used in production of the slurry composition is not specifically limited but can, for example, be set as an amount such that the amount of the water-soluble polymer contained in the slurry composition is not less than 0.5 parts by mass and not more than 10 parts by mass per 100 parts by mass of the electrode active material. Moreover, the amount of the binder composition can be set as an amount such that the amount of the particulate polymer contained in the slurry composition is not less than 0.5 parts by mass and not more than 10 parts by mass per 100 parts by mass of the electrode active material.

### <Electrode active material>

The electrode active material is a material that gives and receives electrons in an electrode of a secondary battery. In a case in which the secondary battery is a lithium ion secondary battery, for example, the electrode active material is normally a material that can occlude and release lithium.

Although the following describes, as one example, a case in which the slurry composition for a secondary battery electrode is a slurry composition for a lithium ion secondary battery electrode, the presently disclosed slurry composition for a secondary battery electrode is not limited to the following example.

Examples of positive electrode active materials for lithium ion secondary batteries include known positive electrode active materials such as lithium-containing cobalt oxide (LiCoO₂), lithium manganate (LiMn₂O₄), lithium-containing nickel oxide (LiNiO₂), a lithium-containing complex oxide of Co-Ni-Mn (Li(Co Mn Ni)O₂), a lithium-containing complex oxide of Ni-Mn-Al, a lithium-containing complex oxide of Ni-Co-Al, olivine-type lithium iron phosphate (LiFePO₄), olivine-type lithium manganese phosphate (LiMnPO₄), a Li₂MnO₃-LiNiO₂-based solid solution, a lithium-rich spinel compound represented by Li₁₊ₓMn₂₋ₓO₄ (0 < x < 2), Li[Ni_{0.17}Li_{0.2}Co_{0.07}Mn_{0.56}]O₂, and LiNi_{0.5}Mn_{1.5}O₄ without any specific limitations.

The amount and particle diameter of the positive electrode active material are not specifically limited and may be the same as those of conventionally used positive electrode active materials.

Examples of negative electrode active materials for lithium ion secondary batteries include carbon-based negative electrode active materials, metal-based negative electrode active materials, and negative electrode active materials that are combinations thereof.

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of the metal-based active material include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal.

Of the electrode active materials described above, negative electrode active materials that include one or more selected from the group consisting of Si, Sn, Ge, Pb, Al, and Li exhibit significant expansion and contraction in accompaniment to charging and discharging of a secondary battery. Even in a situation in which an electrode (negative electrode) is produced using such a negative electrode active material, it is possible to cause a secondary battery to display excellent cycle characteristics by using a slurry composition that contains the presently disclosed binder composition.

Moreover, of such negative electrode active materials, negative electrode active materials that include one or more selected from the group consisting of Si, Sn, and Al are preferable from a viewpoint of increasing the capacity of a lithium ion secondary battery, and negative electrode active materials that include Si (silicon-based negative electrode active materials) are more preferable.

Examples of silicon-based negative electrode active materials include silicon (Si), a silicon-containing alloy, SiO, SiOₓ, and a composite of a Si-containing material and conductive carbon that is obtained by coating or combining the Si-containing material with the conductive carbon.

Note that one of the electrode active materials described above may be used individually, or two or more of the electrode active materials described above may be used in combination.

### <Other components>

Examples of other components that may be contained in the slurry composition include, but are not specifically limited to, the same other components as may be contained in the binder composition set forth above. One other component may be used individually, or two or more other components may be used in combination.

### <Production of slurry composition>

The slurry composition for a secondary battery electrode can be produced by mixing the electrode active material, the binder composition, and other optional components by a known mixing method.

The mixing of the above-described components can be performed using any of the mixers previously described in the "Production of binder composition" section, for example, without any specific limitations.

### (Electrode for secondary battery)

The presently disclosed electrode includes an electrode mixed material layer formed using the slurry composition set forth above. Accordingly, the electrode mixed material layer contains at least an electrode active material, a water-soluble polymer, and polyvalent metal ions (and/or an ionically bonded compound formed of the polyvalent metal ions and anions imported through carboxy groups in the water-soluble polymer or the like), and optionally contains other components. It should be noted that components contained in the electrode mixed material layer are components that are contained in the previously described slurry composition. Furthermore, the preferred ratio of these components in the electrode mixed material layer is the same as the preferred ratio of these components in the slurry composition.

The presently disclosed electrode has excellent peel strength as a result of the electrode mixed material layer being formed using the slurry composition set forth above.

### <Production of electrode for secondary battery>

The electrode mixed material layer of the presently disclosed electrode can be formed on a current collector through a step of applying the slurry composition set forth above onto the current collector (application step) and a step of drying the slurry composition that has been applied onto the current collector to form an electrode mixed material layer on the current collector (drying step), for example.

### <<Application step>>

The slurry composition can be applied onto the current collector by any commonly known method without any specific limitations. Specific examples of application methods that can be used include doctor blading, dip coating, reverse roll coating, direct roll coating, gravure coating, extrusion coating, and brush coating. During application, the slurry composition may be applied onto one side or both sides of the current collector. The thickness of the slurry coating on the current collector after application but before drying may be set as appropriate in accordance with the thickness of the electrode mixed material layer to be obtained after drying.

The current collector onto which the slurry composition is applied is a material having electrical conductivity and electrochemical durability. Specifically, the current collector may, for example, be made of iron, copper, aluminum, nickel, stainless steel, titanium, tantalum, gold, platinum, or the like. One of these materials may be used individually, or two or more of these materials may be used in combination in a freely selected ratio.

### <<Drying step>>

The slurry composition that has been applied onto the current collector may be dried by any commonly known method without any specific limitations. Examples of drying methods that can be used include drying by warm, hot, or low-humidity air; drying in a vacuum; and drying by irradiation with infrared light, electron beams, or the like. Through drying of the slurry composition on the current collector in this manner, an electrode mixed material layer can be formed on the current collector to thereby obtain an electrode that includes the current collector and the electrode mixed material layer.

After the drying step, the electrode mixed material layer may be further subjected to a pressing process, such as mold pressing or roll pressing. The pressing process can further improve peel strength of the electrode.

### (Secondary battery)

The presently disclosed secondary battery includes the presently disclosed electrode set forth above. For example, the presently disclosed secondary battery may include a positive electrode, a negative electrode, an electrolyte solution, and a separator, and the presently disclosed electrode set forth above may be used as at least one of the positive electrode and the negative electrode. The presently disclosed secondary battery has low initial resistance and can display excellent cycle characteristics as a result of the presently disclosed electrode set forth above being used as at least one of the positive electrode and the negative electrode.

Although the following describes, as one example, a case in which the secondary battery is a lithium ion secondary battery, the presently disclosed secondary battery is not limited to the following example.

### <Electrodes>

Examples of electrodes other than the presently disclosed electrode set forth above that can be used in the presently disclosed secondary battery include known electrodes that are used in production of secondary batteries without any specific limitations. Specifically, an electrode obtained by forming an electrode mixed material layer on a current collector by a known production method may be used as an electrode other than the presently disclosed electrode set forth above.

### <Electrolyte solution>

The electrolyte solution is normally an organic electrolyte solution obtained by dissolving a supporting electrolyte in an organic solvent. The supporting electrolyte of the lithium ion secondary battery may, for example, be a lithium salt. Examples of lithium salts that may be used include LiPF6, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Of these lithium salts, LiPF6, LiClO₄, and CF₃SO₃Li are preferable because they readily dissolve in solvents and exhibit a high degree of dissociation, with LiPF₆ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of organic solvents that can suitably be used include carbonates such as dimethyl carbonate (DMC), ethylene carbonate (EC), diethyl carbonate (DEC), propylene carbonate (PC), butylene carbonate (BC), and ethyl methyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having high permittivity and a wide stable potential region.

The concentration of the electrolyte in the electrolyte solution may be adjusted as appropriate. Furthermore, known additives may be added to the electrolyte solution.

### <Separator>

The separator may be a separator such as described in JP2012-204303A, for example, but is not specifically limited thereto. Of these separators, a microporous membrane made of polyolefinic (polyethylene, polypropylene, polybutene, or polyvinyl chloride) resin is preferred because such a membrane can reduce the total thickness of the separator, which increases the ratio of electrode active material in the secondary battery, and consequently increases the volumetric capacity.

The secondary battery can be produced by, for example, stacking the positive electrode and the negative electrode with the separator in-between, performing rolling, folding, or the like of the resultant laminate in accordance with the battery shape as necessary to place the laminate in a battery container, injecting the electrolyte solution into the battery container, and sealing the battery container. In the presently disclosed secondary battery, the electrode for a secondary battery set forth above is used as at least one of the positive electrode and the negative electrode. The presently disclosed secondary battery may be provided with an overcurrent preventing device such as a fuse or a PTC device; an expanded metal; or a lead plate as necessary in order to prevent pressure increase inside the secondary battery and occurrence of overcharging or overdischarging. The shape of the secondary battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%", "ppm", and "parts" used to indicate quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure and evaluate the molecular weight distribution of a water-soluble polymer, the volume-average particle diameter, gel content, and glass-transition temperature of a particulate polymer, the preservation stability of a slurry composition, the peel strength of a negative electrode, and the initial resistance and cycle characteristics of a secondary battery.

### <Molecular weight distribution>

The weight-average molecular weight and number-average molecular weight of a water-soluble polymer were measured by gel permeation chromatography (GPC). First, the water-soluble polymer was added to approximately 5 mL of an eluent such that the solid content concentration thereof was approximately 0.5 g/L and was gradually dissolved at room temperature. Once dissolution of the water-soluble polymer was visually confirmed, the solution was gently filtered through a 0.45 µm filter to prepare a measurement sample. A calibration curve was prepared using a standard substance so as to calculate the weight-average molecular weight and number-average molecular weight as standard substance-equivalent values. The molecular weight distribution was then calculated by dividing the weight-average molecular weight by the number-average molecular weight.

The measurement conditions were as indicated below.

### <<Measurement conditions>>

Column: Shodex OHpak (SB-G, SB-807HQ, SB-806MHQ) (product name) produced by Showa Denko K.K.
Eluent: 0.1 M Tris buffer solution (0.1 M potassium chloride added)
Flow rate: 0.5 mL/min
Sample concentration: 0.05 g/L (solid content concentration)
Injection volume: 200 µL
Column temperature: 40°C
Detector: Differential refractive index detector RI (produced by Tosoh Corporation; product name: RI-8020)
Standard substance: Monodisperse pullulan (produced by Showa Denko K.K.)

### <Volume-average particle diameter>

The volume-average particle diameter of a particulate polymer was measured by laser diffraction. Specifically, a produced water dispersion containing the particulate polymer (adjusted to a solid content concentration of 0.1 mass%) was used as a sample. In a particle diameter distribution (by volume) measured using a laser diffraction particle diameter distribution analyzer (produced by Beckman Coulter, Inc.; product name: LS-230), the particle diameter D50 at which cumulative volume calculated from a small diameter end of the distribution reached 50% was taken to be the volume-average particle diameter (nm).

### <Gel content>

The gel content of a particulate polymer was determined as a proportion (mass%) of the mass of solid content of the particulate polymer that was insoluble in tetrahydrofuran relative to the mass of all solid content of the particulate polymer. Specifically, a water dispersion containing the particulate polymer was dried in an environment having a humidity of 50% and a temperature of not lower than 23°C and not higher than 25°C for 3 days and was subsequently dried in a 120°C environment for 1 hour using a hot air oven so as to obtain a dried product. This dried product was formed into a film of 3 ± 0.3 mm in thickness and was then cut to a roughly square shape having a side length of not less than 3 mm and not more than 5 mm so as to obtain a dry film piece.

The prepared dry film piece was precisely weighed, and the weight of the dry film piece was taken to be V0.

Next, the dry film piece was immersed in 100 g of tetrahydrofuran at not lower than 23°C and not higher than 25°C for 24 hours and was caused to dissolve. The residual film piece withdrawn from the tetrahydrofuran was vacuum dried in a 105°C environment for 3 hours, the residual film piece that had been dried was then precisely weighed, and the weight of the residual film piece was taken to be VI.

The values of precise weighing that were obtained were then used to calculate the gel content (mass%) by a formula: gel content = (V1/V0) × 100.

### <Glass-transition temperature>

The glass-transition temperature of a particulate polymer was measured using a differential scanning calorimeter (produced by SII NanoTechnology Inc.; product name: EXSTAR DSC6220). Specifically, 10 mg of a produced particulate polymer was loaded into an aluminum pan as a sample. In addition, an empty aluminum pan was used as a reference substance. The sample was loaded into the differential scanning calorimeter and was measured in a temperature range of -100°C to 200°C (heating rate: 10°C/min) to obtain a differential scanning calorimetry (DSC) curve. The temperature corresponding to an intersection point of a baseline directly before a heat absorption peak on the DSC curve at which a derivative signal (DDSC) reached 0.05 mW/min/mg or more and a tangent to the DSC curve at a first inflection point to appear after the heat absorption peak was determined as the glass-transition temperature (°C).

### <Preservation stability>

A produced slurry composition was transferred into a 20 mL transparent plastic vessel, was left therein, and the change in state thereof (sedimentation, gelation) over time was evaluated visually and by touch. Specifically, sedimentation was judged to have occurred in a case in which a transparent supernatant was confirmed at the top of the slurry composition and/or in a case in which lumpy material was confirmed at the bottom of the slurry composition using a lab spoon. Moreover, gelation was judged to have occurred in a case in which fluidity could not be confirmed upon tilting of the plastic vessel. These changes over time were evaluated in accordance with the following standard.
A: Sedimentation and gelation both not confirmed at point after being left for 72 hours
B: Sedimentation and/or gelation confirmed after being left for not less than 48 hours and less than 72 hours
C: Sedimentation and/or gelation confirmed after being left for not less than 24 hours and less than 48 hours
D: Sedimentation and/or gelation confirmed after being left for less than 24 hours

### <Peel strength>

A test specimen of 50 mm in length by 10 mm in width was cut out from a produced negative electrode.

Cellophane tape was then affixed to the surface of a negative electrode mixed material layer of the test specimen. Tape prescribed by JIS Z1522 was used as the cellophane tape. The test specimen was placed on a horizontal test stage with the surface at the negative electrode mixed material layer-side of the test specimen facing downward, and the cellophane tape was fixed to the test stage.

The stress (N/m) when one end of the current collector was pulled vertically upward at a speed of 50 mm/min to peel off the current collector was measured. A total of three measurements were made in this manner. The average value thereof was determined, was taken to be the peel strength of the negative electrode, and was evaluated by the following standard.
A: Peel strength of 11 N/m or more
B: Peel strength of not less than 7 N/m and less than 11 N/m
C: Peel strength of not less than 4 N/m and less than 7 N/m
D: Peel strength of less than 4 N/m

### <Initial resistance>

A produced lithium ion secondary battery was left at rest in a 25°C environment for 24 hours after injection of electrolyte solution. The lithium ion secondary battery was subsequently charged to a cell voltage of 4.2 V by a 0.2C constant-current constant-voltage method (cut-off current value: 0.02C). After charging, discharging was performed to 3.85 V by a 0.2C constant-current constant-voltage method (cut-off current value: 0.02C). Thereafter, operations of discharging for 30 seconds and charging for 30 seconds were repeated at specific measurement rates (0.2C, 0.5C, 1C, 2.5C).

The amount of current at each of the measurement rates and the voltage drop during 30 seconds of discharging at each of the measurement rates were plotted, and the voltage drop per unit current was calculated for a location at which the plot displayed linearity. In this manner, the initial resistance (Ω) was calculated and was evaluated by the following standard.
A: Initial resistance of 3.0 Ω or less
B: Initial resistance of more than 3.0 Ω and not more than 3.3 Ω
C: Initial resistance of more than 3.3 Ω and not more than 3.8 Ω
D: Initial resistance of more than 3.8 Ω

### <Cycle characteristics>

A produced lithium ion secondary battery was left at rest in a 25°C environment for 24 hours after injection of electrolyte solution. The lithium ion secondary battery was then subjected to a charge/discharge operation of charging to a cell voltage of 4.2 V and discharging to a cell voltage of 2.75 V by a 0.1C constant-current method, and the initial discharge capacity C0 thereof was measured. The lithium ion secondary battery was also repeatedly subjected to charging to a cell voltage of 4.2 V and discharging to a cell voltage of 2.75 V in a 25°C environment, and capacity measurement was implemented by the same operation as for C0 so as to measure the discharge capacity C1 after 100 cycles. A capacity maintenance rate C2 was calculated by a formula: C2 (%) = (C1/C0) × 100. A larger value indicates better cycle characteristics.
A: Capacity maintenance rate C2 of 90% or more
B: Capacity maintenance rate C2 of not less than 80% and less than 90%
C: Capacity maintenance rate C2 of not less than 50% and less than 80%
D: Capacity maintenance rate C2 of less than 50%

### (Example 1)

### <Production of water-soluble polymer>

A reaction tank of 1 L in capacity that included a stirrer, a thermometer, a nitrogen gas feed tube, and a reflux tube was charged with 641 g of water. Next, 3.2 g of sodium sulfite and 27 g of 1% polyvinyl alcohol aqueous solution were added and dissolved. The solution was then subjected to 1 hour of bubbling with nitrogen gas at 1 L/min, and, once sufficient degassing of the system had occurred, heating was performed until the internal temperature reached 60°C. After this heating, 28.14 g of methyl acrylate as a carboxylic acid ester monomer and 41.86 g of vinyl acetate as a vinyl ester monomer were added and were stirred for 5 minutes. Thereafter, 0.7 g of t-butyl peroxy-2-ethylhexanoate (produced by NOF Corporation; product name: PERBUTYL^{®} O (PERBUTYL is a registered trademark in Japan, other countries, or both)) was added, and 2 hours of polymerization was performed to yield a milky white polymerized product. Next, 270 g of methanol and 15 g of sodium hydroxide were added relative to 300 g of the obtained aqueous solution containing the polymerized product, and a reaction was carried out at 30°C for 4 hours to thereby perform saponification and obtain a suspension. Water-soluble polymer was collected from the obtained suspension using a Kiriyama funnel and was then dried at room temperature. The dried water-soluble polymer comprised 60% of vinyl alcohol structural units and 40% of acrylic acid units. The molecular weight distribution of this water-soluble polymer was measured. The result is shown in Table 1.

### <Production of particulate polymer>

A 5 MPa pressure-resistant vessel A equipped with a stirrer was charged with 3.15 parts of styrene as an aromatic vinyl monomer, 1.66 parts of 1,3-butadiene as an aliphatic conjugated diene monomer, 0.2 parts of sodium lauryl sulfate as an emulsifier, 20 parts of deionized water, and 0.03 parts of potassium persulfate as a polymerization initiator. These materials were sufficiently stirred, were then heated to 60°C to initiate polymerization, and were reacted for 6 hours to yield seed particles.

After this reaction, the temperature was raised to 75°C, and then addition of a mixture of 59.05 parts of styrene as an aromatic vinyl monomer, 31.34 parts of 1,3-butadiene as an aliphatic conjugated diene monomer, 3.8 parts of itaconic acid as a carboxy group-containing monomer, 0.25 parts of tert-dodecyl mercaptan as a chain transfer agent, and 0.35 parts of sodium lauryl sulfate as an emulsifier, which was loaded into a separate vessel B, was initiated with respect to the pressure-resistant vessel A. Simultaneously to the start of this addition, addition of 1 part of potassium persulfate as a polymerization initiator was initiated with respect to the pressure-resistant vessel A so as to initiate second stage polymerization.

Once 4 hours had passed from the start of the second stage polymerization (once 70% of the overall monomer composition had been added), 1 part of 2-hydroxyethyl acrylate as a hydroxy group-containing monomer was added into the pressure-resistant vessel A over 1.5 hours.

In other words, 62.2 parts of styrene as an aromatic vinyl monomer, 33 parts of 1,3-butadiene as an aliphatic conjugated diene monomer, 3.8 parts of itaconic acid as a carboxy group-containing monomer, and 1 part of 2-hydroxyethyl acrylate as a hydroxy group-containing monomer were used as the overall monomer composition.

Once 5.5 hours had passed from the start of the second stage polymerization, addition of the total amount of a mixture containing this monomer composition was complete, and then the temperature was further raised to 85°C and a reaction was performed for 6 hours.

Cooling was performed to quench the reaction at the point at which the polymerization conversion rate reached 97%. The mixture containing this polymerized product was adjusted to pH 8 through addition of 5% sodium hydroxide aqueous solution. Unreacted monomer was subsequently removed through thermal-vacuum distillation. Thereafter, cooling was performed to yield a water dispersion containing a particulate polymer. The volume-average particle diameter, gel content, and glass-transition temperature of the particulate polymer were measured. The results are shown in Table 1.

### <Production of binder composition for secondary battery>

Mixing of 5 g of the water-soluble polymer obtained as described above with 95 g of deionized water was performed to dissolve the water-soluble polymer. Iron sulfate (FeSO₄) was gradually added to the resultant aqueous solution of the water-soluble polymer under stirring. Note that the addition of iron sulfate was performed such that the mass of iron relative to the water-soluble polymer was 150 ppm.

The aqueous solution of the water-soluble polymer to which iron sulfate had been added in this manner and the water dispersion of the particulate polymer obtained as previously described were mixed such that the mass ratio (ratio in terms of solid content) of the water-soluble polymer and the particulate polymer was 2:1 (water-soluble polymer:particulate polymer) so as to produce a binder composition.

### <Production of slurry composition for secondary battery negative electrode>

A planetary mixer equipped with a disper blade was charged with 77.8 parts of artificial graphite (volume-average particle diameter: 24.5 µm; specific surface area: 4 m²/g) and 19.2 parts of SiOₓ as negative electrode active materials and 3.0 parts in terms of solid content of the binder composition obtained as described above (2.0 parts of water-soluble polymer and 1.0 parts of particulate polymer), and these materials were adjusted to a solid content concentration of 63.3% with deionized water and were mixed at room temperature for 60 minutes. Next, the solid content concentration was adjusted to 49.6% with deionized water, and a further 15 minutes of mixing was performed to yield a mixture. The obtained mixture was subjected to a defoaming process to obtain a slurry composition. The preservation stability of the resultant slurry composition was evaluated. The result is shown in Table 1.

### <Production of negative electrode>

The slurry composition for a secondary battery negative electrode obtained as described above was applied onto copper foil (current collector) of 16 µm in thickness using a comma coater such as to have a thickness after drying of 105 µm and a coating weight of 10 mg/cm². The copper foil with the slurry composition applied thereon was conveyed inside an oven having a temperature of 80°C for 2 minutes and an oven having a temperature of 120°C for 2 minutes at a speed of 0.5 m/min so as to dry the slurry composition on the copper foil and thereby obtain a negative electrode web. The negative electrode web was rolled by roll pressing to obtain a negative electrode having a negative electrode mixed material layer thickness of 80 µm. The peel strength of this negative electrode was measured. The result is shown in Table 1.

### <Production of positive electrode>

Mixing was performed with respect to 100 parts of LiCoO₂ (volume-average particle diameter: 12 µm) as a positive electrode active material, 2 parts of acetylene black (produced by Denka Company Limited; product name: HS-100) as a conductive material, and 2 parts in terms of solid content of polyvinylidene fluoride (produced by Kureha Corporation; product name: #7208) as a binder for a positive electrode, and then N-methyl-2-pyrrolidone was added to adjust the total solid content concentration thereof to 70 mass%. These materials were mixed by a planetary mixer to produce a slurry composition for a secondary battery positive electrode.

The obtained slurry composition was applied onto aluminum foil of 20 µm in thickness serving as a current collector using a comma coater such as to have a thickness after drying of approximately 150 µm, and was dried. The drying was performed by conveying the aluminum foil inside an oven having a temperature of 60°C for 2 minutes at a speed of 0.5 m/min. Thereafter, 2 minutes of heat treatment was performed at a temperature of 120°C to obtain a positive electrode web. The obtained positive electrode web was rolled by roll pressing to obtain a positive electrode having a positive electrode mixed material layer thickness of 80 µm.

### <Production of secondary battery>

A laminate film formed of an aluminum sheet and polypropylene resin covering both sides of the aluminum sheet was used to produce a battery container. Next, the electrode mixed material layer was removed from the ends of the positive electrode and the negative electrode obtained as described above such as to form a location at which the copper foil or the aluminum foil was exposed. A Ni tab was welded to the location where the aluminum foil of the positive electrode was exposed, and a Cu tab was welded to the location where the copper foil of the negative electrode was exposed. The tab-equipped positive electrode and the tab-equipped negative electrode that were obtained were then stacked such as to sandwich a separator formed of a microporous membrane made of polyethylene therebetween. The surfaces of the electrodes were arranged such that the surface at the positive electrode mixed material layer-side of the positive electrode and the surface at the negative electrode mixed material layer-side of the negative electrode faced each other. The stacked electrodes and separator were wound up and were then housed inside the previously described battery container. Electrolyte solution was subsequently injected into the battery container. The electrolyte solution was prepared by mixing ethylene carbonate and diethyl carbonate in a volume ratio of 1:2 at 25°C to obtain a mixed solvent and dissolving LiPF₆ in the mixed solvent such as to have a concentration of 1 mol/L.

Next, the laminate film was sealed to thereby produce a laminate cell-type lithium ion secondary battery. The initial resistance and cycle characteristics of the obtained lithium ion secondary battery were evaluated. The results are shown in Table 1.

### (Example 2)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the binder composition, calcium sulfate (CaSO₄) was added to the aqueous solution of the water-soluble polymer instead of iron sulfate such that the mass of calcium relative to the water-soluble polymer was 20 ppm. The results are shown in Table 1.

### (Example 3)

A water-soluble polymer, a slurry composition for a secondary battery negative electrode, a negative electrode, a positive electrode, and a secondary battery were prepared and various evaluations were performed in the same way as in Example 1 with the exception that a particulate polymer was not produced and that a binder composition was produced as described below. The results are shown in Table 1.

### <Production of binder composition>

Mixing of 5 g of the water-soluble polymer with 95 g of deionized water was performed to dissolve the water-soluble polymer. Iron sulfate (FeSO₄) was gradually added to the resultant aqueous solution of the water-soluble polymer under stirring. Note that the addition of iron sulfate was performed such that the mass of iron relative to the water-soluble polymer was 150 ppm.

The aqueous solution of the water-soluble polymer to which iron sulfate had been added in this manner was used as a binder composition.

### (Examples 4 to 6)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the binder composition, the additive amount of iron sulfate was changed such that the mass of iron relative to the water-soluble polymer was 30 ppm (Example 4), 700 ppm (Example 5), or 4,000 ppm (Example 6). The results are shown in Table 1.

### (Example 7)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the binder composition, aluminum nitrate (Al(NO₃)₃) was added to the aqueous solution of the water-soluble polymer instead of iron sulfate such that the mass of aluminum relative to the water-soluble polymer was 120 ppm. The results are shown in Table 1.

### (Example 8)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the binder composition, nickel sulfate (NiSO₄) was added to the aqueous solution of the water-soluble polymer instead of iron sulfate such that the mass of nickel relative to the water-soluble polymer was 230 ppm. The results are shown in Table 1.

### (Example 9)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the water-soluble polymer, the used amounts of vinyl acetate and methyl acrylate were changed such that the proportional content of vinyl alcohol structural units was 45% and the proportional content of acrylic acid units was 55% in the obtained water-soluble polymer. The results are shown in Table 2.

### (Example 10)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the water-soluble polymer, the used amounts of vinyl acetate and methyl acrylate were changed such that the proportional content of vinyl alcohol structural units was 70% and the proportional content of acrylic acid units was 30% in the obtained water-soluble polymer. The results are shown in Table 2.

### (Example 11)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the particulate polymer, the amounts of styrene, 1,3-butadiene, and itaconic acid added during the second stage polymerization were changed to 55.95 parts, 29.74 parts, and 8.5 parts, respectively (i.e., the overall monomer composition was 59.1 parts of styrene as an aromatic vinyl monomer, 31.4 parts of 1,3-butadiene as an aliphatic conjugated diene monomer, 8.5 parts of itaconic acid as a carboxy group-containing monomer, and 1 part of 2-hydroxyethyl acrylate as a hydroxy group-containing monomer). The results are shown in Table 2.

### (Example 12)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the particulate polymer, the amounts of styrene and 1,3-butadiene added during the second stage polymerization were changed to 61.55 parts and 32.64 parts, respectively, and itaconic acid was not used (i.e., the overall monomer composition was 64.7 parts of styrene as an aromatic vinyl monomer, 34.3 parts of 1,3-butadiene as an aliphatic conjugated diene monomer, and 1 part of 2-hydroxyethyl acrylate as a hydroxy group-containing monomer). The results are shown in Table 2.

### (Example 13)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the particulate polymer, the amounts of styrene, 1,3-butadiene, and itaconic acid added during the second stage polymerization were changed to 51.75 parts, 27.44 parts, and 15 parts, respectively (i.e., the overall monomer composition was 54.9 parts of styrene as an aromatic vinyl monomer, 29.1 parts of 1,3-butadiene as an aliphatic conjugated diene monomer, 15 parts of itaconic acid as a carboxy group-containing monomer, and 1 part of 2-hydroxyethyl acrylate as a hydroxy group-containing monomer). The results are shown in Table 2.

### (Example 14)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the particulate polymer, 3.8 parts of methacrylic acid was used instead of 3.8 parts of itaconic acid in the second stage polymerization (i.e., the overall monomer composition was 62.2 parts of styrene as an aromatic vinyl monomer, 33 parts of 1,3-butadiene as an aliphatic conjugated diene monomer, 3.8 parts of methacrylic acid as a carboxy group-containing monomer, and 1 part of 2-hydroxyethyl acrylate as a hydroxy group-containing monomer). The results are shown in Table 2.

### (Comparative Example 1)

A slurry composition for a secondary battery negative electrode, a negative electrode, a positive electrode, and a secondary battery were prepared and various evaluations were performed in the same way as in Example 1 with the exception that a particulate polymer was not produced and that a water-soluble polymer and a binder composition were produced as described below. The results are shown in Table 2.

### <Production of water-soluble polymer>

A reaction tank of 1 L in capacity that included a stirrer, a thermometer, a nitrogen gas feed tube, and a reflux tube was charged with 641 g of water. Next, 3.2 g of sodium sulfite and 27 g of 1% polyvinyl alcohol aqueous solution were added and dissolved. The solution was then subjected to 1 hour of bubbling with nitrogen gas at 1 L/min, and, once sufficient degassing of the system had occurred, heating was performed until the internal temperature reached 60°C. After this heating, 0.7 g of t-butyl peroxy-2-ethylhexanoate (produced by NOF Corporation; product name: PERBUTYL O) was added, and then 28.14 g of methyl acrylate and 41.86 g of vinyl acetate were added and were stirred for 5 minutes. Thereafter, 2 hours of polymerization was performed to yield a milky white polymerized product. Next, 270 g of methanol and 15 g of sodium hydroxide were added relative to 300 g of the obtained aqueous solution containing the polymerized product, and a reaction was carried out at 30°C for 4 hours to thereby perform saponification and obtain a suspension. Water-soluble polymer was collected from the obtained suspension using a Kiriyama funnel and was then dried at room temperature. The dried water-soluble polymer comprised 60% of vinyl alcohol structural units and 40% of acrylic acid units.

### <Production of binder composition for secondary battery>

Mixing of 5 g of the water-soluble polymer obtained as described above with 95 g of deionized water was performed to dissolve the water-soluble polymer and thereby produce a binder composition.

### (Comparative Example 2)

A particulate polymer, a slurry composition for a secondary battery negative electrode, a negative electrode, a positive electrode, and a secondary battery were prepared and various evaluations were performed in the same way as in Example 1 with the exception that a water-soluble polymer was produced in the same way as in Comparative Example 1 and that a binder composition was produced as described below. The results are shown in Table 2.

### <Production of binder composition for secondary battery>

Mixing of 5 g of the obtained water-soluble polymer with 95 g of deionized water was performed to dissolve the water-soluble polymer. The resultant aqueous solution of the water-soluble polymer and the water dispersion of the particulate polymer were mixed such that the mass ratio (ratio in terms of solid content) of the water-soluble polymer and the particulate polymer was 2:1 (water-soluble polymer:particulate polymer) so as to produce a binder composition.

### (Comparative Example 3)

A water-soluble polymer, a particulate polymer, a binder composition for a secondary battery, a slurry composition for a secondary battery negative electrode, a negative electrode, a positive electrode, and a secondary battery were prepared and various evaluations were performed in the same way as in Example 1 with the exception that in production of the binder composition, the additive amount of iron sulfate was changed such that the mass of iron relative to the water-soluble polymer was 30,000 ppm. The results are shown in Table 2.

In Tables 1 and 2, shown below:
"AA" indicates acrylic acid unit;
"Na" indicates sodium salt;
"Fe" indicates iron ions;
"Ca" indicates calcium ions;
"Al" indicates aluminum ions;
"Ni" indicates nickel ions;
"BD" indicates 1,3-butadiene unit;
"ST" indicates styrene unit;
"IA" indicates itaconic acid unit;
"MAA" indicates methacrylic acid unit;
"HEA" indicates 2-hydroxyethyl acrylate unit;
"Mw/Mn" indicates molecular weight distribution; and
"Tg" indicates glass-transition temperature.

**Table 1**

| | | | | | Example 1 | Example 2 | Example 3 | Example 4 | Example 5 | Example 6 | Example | 7 Example 8 |
|---|---|---|---|---|---|---|---|---|---|---|---|---|
| | | Water-soluble polymer | Vinyl alcohol structural unit | Proportion [mass%] | 60 | 60 | 60 | 60 | 60 | 60 | 60 | 60 |
| | | | Carboxy group-containing monomer unit | Type | AA | AA | AA | AA | AA | AA | AA | AA |
| | | | | Proportion [mass%] | 40 | 40 | 40 | 40 | 40 | 40 | 40 | 40 |
| | | | | Form | Na | Na | Na | Na | Na | Na | Na | Na |
| | | | Mw/Mn [-] | | 1.8 | 1.8 | 1.8 | 1.8 | 1.8 | 1.8 | 1.8 | 1.8 |
| | | Polyvalent metal ions | Type | | Fe | Ca | Fe | Fe | Fe | Fe | A1 | Ni |
| | | | Valence [valence units] | | 2 | 2 | 2 | 2 | 2 | 2 | 3 | 2 |
| | | | Ionically bonded compound | | FeSO₄ | CaSO₄ | FeSO₄ | FeSO₄ | FeSO₄ | FeSO₄ | Al(NO₃)₃ | NiSO₄ |
| | | | Amount relative to water-soluble polymer [mass ppm] | | 150 | 20 | 150 | 30 | 700 | 4000 | 120 | 230 |
| | Binder composition | | Aliphatic conjugated diene monomer unit | Type | BD | BD | - | BD | BD | BD | BD | BD |
| | | | | Proportion [mass%] | 33 | 33 | - | 33 | 33 | 33 | 33 | 33 |
| Slurry composition | | | Aromatic vinyl monomer unit | Type | ST | ST | - | ST | ST | ST | ST | ST |
| | | | | Proportion [mass%] | 62.2 | 62.2 | - | 62.2 | 62.2 | 62.2 | 62.2 | 62.2 |
| | | Particulate polymer | Carboxy group-containing monomer unit | Type | IA | IA | - | IA | IA | IA | IA | IA |
| | | | | Proportion [mass%] | 3.8 | 3.8 | - | 3.8 | 3.8 | 3.8 | 3.8 | 3.8 |
| | | | Hydroxy group-containing monomer unit | Type | HEA | HEA | - | HEA | HEA | HEA | HEA | HEA |
| | | | | Proportion [mass%] | 1 | 1 | - | 1 | 1 | 1 | 1 | 1 |
| | | | Volume-average particle diameter [nm] | | 145 | 145 | - | 145 | 145 | 145 | 145 | 145 |
| | | | Gel content [mass%] | | 90 | 90 | - | 90 | 90 | 90 | 90 | 90 |
| | | | Tg [°C] | | 10 | 10 | - | 10 | 10 | 10 | 10 | 10 |
| | | Water-soluble polymer:Particulate polymer (mass ratio) | | | 2:1 | 2:1 | - | 2:1 | 2:1 | 2:1 | 2:1 | 2:1 |
| | Negative electrode active material | | Type | | Graphite SiOₓ | Graphite SiOₓ | Graphite SiOₓ | Graphite SiOₓ | Graphite SiOₓ | Graphite SiOₓ | Graphite SiOₓ | Graphite SiOₓ |
| Peel strength | | | | | A | A | B | B | A | A | A | A |
| Preservation stability | | | | | A | B | A | A | A | B | A | A |
| Initial resistance | | | | | A | B | B | A | A | A | A | A |
| Cycle characteristics | | | | | A | B | B | B | A | A | A | A |

**Table 2**

| | | | | | Example 9 | Example 10 | Example 11 | Example 12 | Example 13 | Example 14 | Comparative Example 1 | Comparative Example 2 | Comparative Example 3 |
|---|---|---|---|---|---|---|---|---|---|---|---|---|---|
| | | Water-soluble polymer | Vinyl alcohol structural unit | Proportion [mass%] | 45 | 70 | 60 | 60 | 60 | 60 | 60 | 60 | 60 |
| | | | Carboxy group- containing monomer unit | Type | AA | AA | AA | AA | AA | AA | AA | AA | AA |
| | | | | Proportion [mass%] | 55 | 30 | 40 | 40 | 40 | 40 | 40 | 40 | 40 |
| | | | | Form | Na | Na | Na | Na | Na | Na | Na | Na | Na |
| | | | Mw/Mn [-] | | 1.8 | 1.8 | 1.8 | 1.8 | 1.8 | 1.8 | 24 | 24 | 1.8 |
| | | Polyvalent metal ions | Type | | Fe | Fe | Fe | Fe | Fe | Fe | - | - | Fe |
| | | | Valence [valence units] | | 2 | 2 | 2 | 2 | 2 | 2 | - | - | 2 |
| | | | Ionically bonded compound | | FeSO₄ | FeSO₄ | FeSO₄ | FeSO₄ | FeSO₄ | FeSO₄ | - | - | FeSO₄ |
| | | | Amount relative to water-soluble polymer [mass ppm] | | 150 | 150 | 150 | 150 | 150 | 150 | - | - | 30000 |
| | Binder composition | | Aliphatic conjugated diene monomer unit | Type | BD | BD | BD | BD | BD | BD | - | BD | BD |
| | | | | Proportion [mass%] | 33 | 33 | 31.4 | 34.3 | 29.1 | 33 | | 33 | 33 |
| Slurry composition | | | Aromatic vinyl monomer unit | Type | ST | ST | ST | ST | ST | ST | | ST | ST |
| | | | | Proportion [mass%] | 62.2 | 62.2 | 59.1 | 64.7 | 54.9 | 62.2 | - | 62.2 | 62.2 |
| | | Particulate polymer | Carboxy group-containing monomer unit | Type | IA | IA | IA | - | IA | MAA | - | IA | IA |
| | | | | Proportion [mass%] | 3.8 | 3.8 | 8.5 | - | 15 | 3.8 | - | 3.8 | 3.8 |
| | | | Hydroxy group-containing monomer unit | Type | HEA | HEA | HEA | HEA | HEA | HEA | - | HEA | HEA |
| | | | | Proportion [mass%] | 1 | 1 | 1 | 1 | 1 | 1 | - | 1 | 1 |
| | | | Volume-average particle diameter [nm] | | 145 | 145 | 145 | 145 | 145 | 145 | - | 145 | 145 |
| | | | Gel content [mass%] | | 90 | 90 | 90 | 90 | 90 | 90 | - | 90 | 90 |
| | | | Tg [°C] | | 10 | 10 | 10 | 10 | 10 | 10 | - | 10 | 10 |
| | | Water-soluble polymer:Particulate polymer (mass ratio) | | | 2:1 | 2:1 | 2:1 | 2:1 | 2:1 | 2:1 | - | 2:1 | 2:1 |
| | Negative electrode active material | | Type | | Graphite SiOₓ | Graphite SiOₓ | Graphite SiOₓ | Graphite SiOₓ | Graphite SiOₓ | Graphite SiOₓ | Graphite SiOₓ | Graphite SiOₓ | Graphite SiOₓ |
| Peel strength | | | | | A | A | A | B | A | A | D | C | A |
| Preservation stability | | | | | A | B | A | A | B | A | A | A | D |
| Initial resistance | | | | | A | A | A | A | A | A | D | D | B |
| Cycle characteristics | | | | | A | A | A | B | A | A | D | C | B |

It can be seen from Tables 1 and 2 that a slurry composition having excellent preservation stability and an electrode having excellent peel strength can be obtained using the binder compositions of Examples 1 to 14. It can also be seen that secondary batteries including negative electrodes produced using the binder compositions of Examples 1 to 14 have low initial resistance and excellent cycle characteristics.

Moreover, it can be seen from Table 2 that in Comparative Examples 1 and 2 where a binder composition that does not contain polyvalent metal ions is used, the peel strength of an electrode decreases, the initial resistance of a secondary battery increases, and cycle characteristics deteriorate.

It can also be seen from Table 2 that in Comparative Example 3 where a binder composition in which the content of polyvalent metal ions exceeds a specific value is used, preservation stability of a slurry composition decreases.

### INDUSTRIAL APPLICABILITY

According to the present disclosure, it is possible to provide a binder composition for a secondary battery with which it is possible to produce a slurry composition for a secondary battery electrode that has excellent preservation stability and can produce an electrode having excellent peel strength.

Moreover, according to the present disclosure, it is possible to provide a slurry composition for a secondary battery electrode that has excellent preservation stability and can produce an electrode having excellent peel strength.

Furthermore, according to the present disclosure, it is possible to provide an electrode for a secondary battery that has excellent peel strength and a secondary battery that includes this electrode for a secondary battery.

## Claims

1. A binder composition for a secondary battery comprising a water-soluble polymer and polyvalent metal ions, wherein
the water-soluble polymer includes a vinyl alcohol structural unit and a carboxy group-containing monomer unit, and
content of the polyvalent metal ions is not less than 0.1 mass ppm and not more than 10,000 mass ppm relative to the water-soluble polymer.

2. The binder composition for a secondary battery according to claim 1, wherein the water-soluble polymer has a molecular weight distribution of not less than 1.5 and not more than 20.

3. The binder composition for a secondary battery according to claim 1 or 2, wherein the polyvalent metal ions are either or both of ions of a transition metal and ions of a metal belonging to group 13 of the periodic table.

4. The binder composition for a secondary battery according to any one of claims 1 to 3, further comprising a particulate polymer.

5. The binder composition for a secondary battery according to claim 4, wherein the particulate polymer includes a carboxy group-containing monomer unit in a proportion of not less than 1 mass% and not more than 10 mass%.

6. The binder composition for a secondary battery according to claim 4 or 5, wherein the water-soluble polymer constitutes a proportion of not less than 30 mass% and not more than 80 mass% among a total of the water-soluble polymer and the particulate polymer.

7. A slurry composition for a secondary battery electrode comprising:
an electrode active material; and the binder composition for a secondary battery according to any one of claims 1 to 6.

8. The slurry composition for a secondary battery electrode according to claim 7, wherein the electrode active material is a negative electrode active material including one or more selected from the group consisting of Si, Sn, Ge, Pb, Al, and Li.

9. An electrode for a secondary battery comprising an electrode mixed material layer formed using the slurry composition for a secondary battery electrode according to claim 7 or 8.

10. A secondary battery comprising the electrode for a secondary battery according to claim 9.
